# FASCICULE DE BREVET EUROPEEN

(11) **EP 1 717 830 B1**
(45) Date de publication et mention de la délivrance du brevet: **09.06.2010**
(21) Numéro de dépôt: 06354011.6
(22) Date de dépôt: 20.03.2006
(51) Int. Cl.: H01G 5/04

(54) **Micro-condensateur électromécanique à capacité variable et procédé de fabrication d'un tel micro-condensateur**
Elektromechanischer Micro-Kondensator mit variabler Kapazität und Verfahren zur Herstellung eines solchen Kondensators
Electromechanical micro-capacitor with variable capacity and process of manufacture of such a capacitor

(30) Priorité: 25.04.2005 FR 0504105
(43) Date de publication de la demande: 02.11.2006
(73) Titulaire: COMMISSARIAT A L'ENERGIE ATOMIQUE, 75752 Paris (FR)
(72) Inventeur: Casset, Fabrice, 38570 Tencin (FR)
(74) Mandataire: Hecké, Gérard

(56) Documents cités:
- WO-A-2005/001863
- US-A- 6 066 536
- US-A1- 2002 080 554
- US-A1- 2004 257 745
- US-B1- 6 625 004
- GRAY G D; MORGAN M J; KOHL P A: "Electrostatic actuators and tunable micro capacitors/switches with expanded tuning range due to intrinsic stress gradients" PROCEEDINGS OF THE SPIE - THE INTERNATIONAL SOCIETY FOR OPTICAL ENGINEERING, vol. 4981, 2003, pages 202-213, XP002338948 USA
- OZ A ET AL: "RF-CMOS MEMS capacitor having large tuning range" TRANSDUCERS, SOLID-STATE SENSORS, ACTUATORS AND MICROSYSTEMS, 12TH INNATIONAL CONFERENCE ON, 2003, PISCATAWAY, NJ, USA,IEEE, vol. 1, 9 juin 2003 (2003-06-09), pages 851-854, XP010646841 ISBN: 0-7803-7731-1
- PEROULIS D ET AL: "Highly reliable analog MEMS varactors" MICROWAVE SYMPOSIUM DIGEST, 2004 IEEE MTT-S INTERNATIONAL FORT WORTH, TX, USA JUNE 6-11, 2004, PISCATAWAY, NJ, USA,IEEE, vol. 2, 6 juin 2004 (2004-06-06), pages 869-872, XP010728259 ISBN: 0-7803-8331-1

## Description

### Domaine technique de l'invention

L'invention concerne un micro-condensateur électromécanique ayant une capacité variable en fonction d'une tension électrique d'actionnement et comportant au moins des première et seconde électrodes, la première électrode étant solidaire d'une poutre ayant deux extrémités solidaires d'un support fixé sur un substrat.

### État de la technique

Certains micro-condensateurs électromécaniques à capacité variable ont un fonctionnement basé sur la variation de l'écart entre les deux électrodes du condensateur. Ainsi, la capacité du condensateur est, par exemple, contrôlée par l'actionnement de l'une des électrodes permettant de la rapprocher ou de l'écarter de l'autre électrode. L'actionnement est typiquement réalisé par un actionneur électrostatique. Dans le cas de certains types de micro-condensateurs, les forces électrostatiques entre les électrodes provoquent un brusque collage, ce qui limite la plage de variation de la capacité à une variation de 50%.

Le document FR2831705-A1 décrit un micro-condensateur électromécanique à capacité variable comportant une première électrode solidaire d'une poutre suspendue, ou formant la poutre suspendue, ayant deux extrémités solidaires d'un support fixé sur un substrat. Une seconde électrode est disposée sur le substrat. Des électrodes d'actionnement rattachées à la partie centrale de la poutre permettent, en fonction d'une tension électrique d'actionnement, d'attirer la partie centrale de la poutre en direction du substrat et, ainsi, en direction de la seconde électrode. Une couche isolante permet d'éviter le contact électrique entre les première et seconde électrodes. En appliquant, de plus, une tension électrique entre les première et seconde électrodes, la zone de collage entre la première électrode et la seconde électrode s'étend, ce qui permet d'augmenter la capacité du condensateur. Ce condensateur nécessite forcément l'utilisation de deux tensions électriques. Par ailleurs, il est difficile de contrôler l'actionnement de la poutre de telle sorte que seule la partie centrale de la poutre soit proche de la seconde électrode.

### Objet de l'invention

L'invention a pour but de remédier à ces inconvénients et, en particulier, un micro-condensateur électromécanique à capacité variable fonctionnant à basse tension électrique d'actionnement et présentant une capacité stable et une grande plage de variation de la capacité.

Selon l'invention, ce but est atteint par les revendications annexées et, plus particulièrement, par le fait que des contraintes résiduelles provoquent un flambement de la poutre, de manière à ce que la flèche de la poutre soit proche de la seconde électrode.

L'invention a également pour but un procédé de fabrication d'un micro-condensateur selon l'invention, comportant le dépôt sous contrainte d'au moins l'un des éléments choisis parmi la poutre et le support, de manière à ce que des contraintes résiduelles provoquent un flambement de la poutre.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente, en vue de dessus, un mode de réalisation particulier d'un micro-condensateur selon l'invention.
Les figures 2 et 3 représentent, respectivement en coupe selon l'axe A-A et selon l'axe B-B, le micro-condensateur selon la figure 1.
La figure 4 illustre, en coupe selon l'axe B-B, le fonctionnement du micro-condensateur selon la figure 1.
La figure 5 représente, en coupe selon l'axe B-B, une étape d'un mode de réalisation particulier d'un procédé de fabrication d'un micro-condensateur selon la figure 1.
La figure 6 représente, en vue de dessus, un autre mode de réalisation particulier d'un micro-condensateur selon l'invention.
Les figures 7 et 8 représentent, en coupe selon l'axe C-C, deux étapes d'un mode de réalisation particulier d'un procédé de fabrication d'un micro-condensateur selon la figure 6.
Les figures 9 et 10 illustrent schématiquement, en vue de dessus, deux modes de réalisation particuliers des électrodes supplémentaires d'un micro-condensateur selon l'invention.
La figure 11 représente, en coupe selon B-B, une variante de réalisation du micro-condensateur selon la figure 1.

### Description de modes particuliers de réalisation

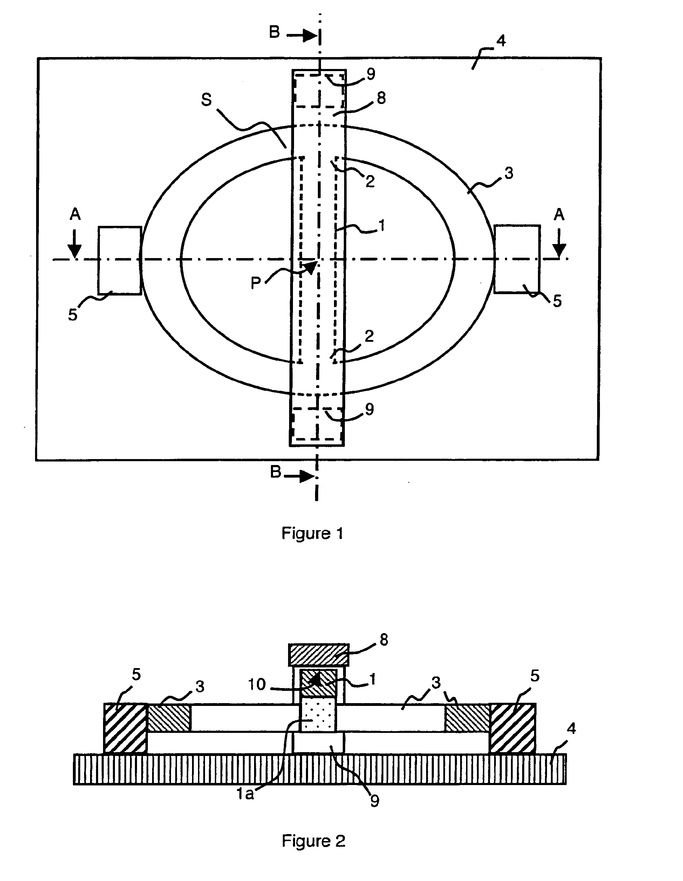

Le micro-condensateur électromécanique à capacité variable représenté aux figures 1 à 3 comporte une poutre 1 ayant deux extrémités 2 solidaires d'un anneau 3 fixé à un substrat 4 par l'intermédiaire de deux socles 5 de fixation. L'anneau 3 constitue, ainsi, un support S pour la poutre 1. Les socles 5 de fixation sont disposés de part et d'autre de l'anneau 3, sur un axe de fixation A-A passant par le centre P de l'anneau 3. La poutre 1 est disposée sur un diamètre de l'anneau 3 perpendiculaire à l'axe de fixation A-A défini par les socles de fixation 5. Sur la figure 1, la poutre 1 est disposée selon un axe B-B.

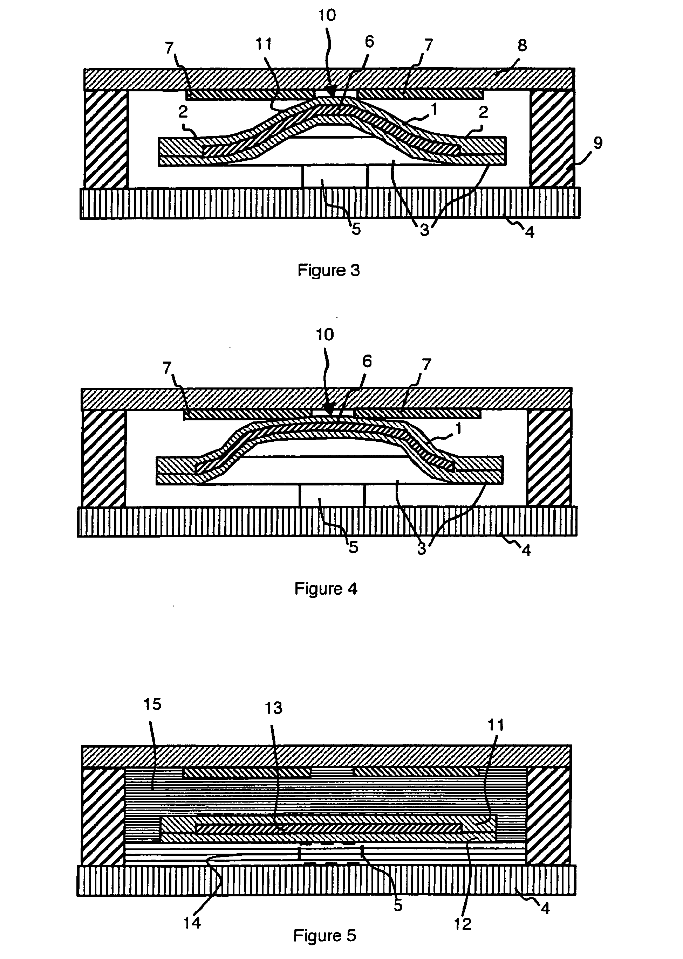

Sur la figure 3, le micro-condensateur comporte une première électrode 6 solidaire de la poutre 1 et deux secondes électrodes 7, non-représentées aux figures 1 et 2 pour des raisons de clarté. Sur la figure 2, une surface pointillée 1a représente une face inférieure de la poutre 1.

Dans le mode de réalisation particulier représenté aux figures 1 à 3, le micro-condensateur comporte un support supplémentaire 8 rattaché au substrat 4 par l'intermédiaire de deux socles supplémentaires 9. Sur la figure 3, les secondes électrodes 7 sont solidaires du support supplémentaire 8 et la poutre 1 est disposée entre le substrat 4 et les secondes électrodes 7.

Des contraintes résiduelles dues à la fixation de l'anneau 3 sur le substrat 4 provoquent un flambement de la poutre 1, de manière à ce que la flèche 10 de la poutre 1 soit proche des secondes électrodes 7. Le flambement se produit notamment lorsque l'anneau 3 est constitué par au moins une couche sous contrainte en traction selon l'axe de fixation A-A ou lorsqu'il comporte au moins une telle couche. La contrainte en traction de l'anneau 3 selon l'axe de fixation A-A provoque un rétrécissement de l'anneau 3 selon le diamètre de l'anneau 3 perpendiculaire à l'axe de fixation A-A, et se traduit alors par une contrainte en compression de la poutre 1 selon son axe longitudinal.

Comme représenté à la figure 3, la poutre 1 comporte, de préférence, une couche isolante 11 supérieure disposée en regard des secondes électrodes 7. Ainsi, la flèche 10 de la poutre 1 peut être en contact avec la seconde électrode 7 sans créer un contact électrique entre la première électrode 6 et les secondes électrodes 7. Dans un autre mode de réalisation, une couche isolante peut être déposée sur les secondes électrodes 7, en regard de la première électrode 6.

La figure 3 représente le micro-condensateur dans une position de repos, c'est-à-dire lorsque la tension d'actionnement est nulle. Le micro-condensateur selon l'invention permet, en fonction d'une tension d'actionnement, d'attirer davantage la poutre 1 en direction de la seconde électrode. Ainsi, en augmentant la tension d'actionnement, une partie de plus en plus importante de la première électrode 6 s'approche de la seconde électrode 7, comme représenté à la figure 4, et la capacité du condensateur est fortement augmentée.

Le micro-condensateur présente l'avantage que, dans sa position de repos (figure 3), une partie centrale de la première électrode 6 est automatiquement proche des secondes électrodes 7 et, ainsi, les forces électrostatiques sont importantes localement, même en appliquant une tension électrique faible. Ces forces électrostatiques locales permettent notamment de faire propager l'attraction entre les électrodes de proche en proche le long des électrodes 6 et 7 et ainsi, d'agrandir la zone de contact entre la poutre 1 et les secondes électrodes 7.

Sur la figure 3, les deux secondes électrodes 7 sont disposées en regard de la poutre 1, selon un axe parallèle à l'axe longitudinal de la poutre 1, respectivement de part et d'autre de la flèche 10 de la poutre 1. Ainsi, les secondes électrodes 7 ne sont pas disposées en regard de la flèche 10 elle-même, ce qui permet de réduire la capacité du condensateur dans la position de repos de la poutre 1 et ainsi, d'élargir la plage de variation de capacité.

Un procédé de fabrication du micro-condensateur selon l'invention comporte le dépôt sous contrainte de la poutre 1 et/ou du support S de la poutre, de manière à ce que des contraintes résiduelles provoquent un flambement de la poutre 1. Par exemple, la poutre 1 et l'anneau 3 peuvent être réalisés en un seul empilement de couches sur une première couche sacrificielle 14, comme représenté à la figure 5. Ledit empilement comporte une couche isolante 12 inférieure, une couche conductrice 13 constituant la première électrode 6 et la couche isolante 11 supérieure. La couche conductrice 13 peut être limitée à la partie de l'empilement correspondant à la poutre 1, comme représenté à la figure 5. Ainsi, l'anneau 3 est uniquement constitué par les couches isolantes inférieure 12 et supérieure 11.

Dans le mode de réalisation particulier représenté à la figure 5, le dépôt de la couche isolante 12 inférieure est effectué sur une la première couche sacrificielle 14. Une seconde couche sacrificielle 15 permet de réaliser le support supplémentaire 8.

L'empilement constituant la poutre 1 et l'anneau 3 est déposé de manière à ce que, après enlèvement des première et seconde couches sacrificielles 14 et 15, l'empilement soit sous contrainte en traction selon l'axe de fixation A-A. Ainsi, la contrainte en traction de l'anneau 3 provoque un étirement de l'anneau selon l'axe de fixation A-A et, ainsi, le flambement de la poutre 1 selon son axe longitudinal.

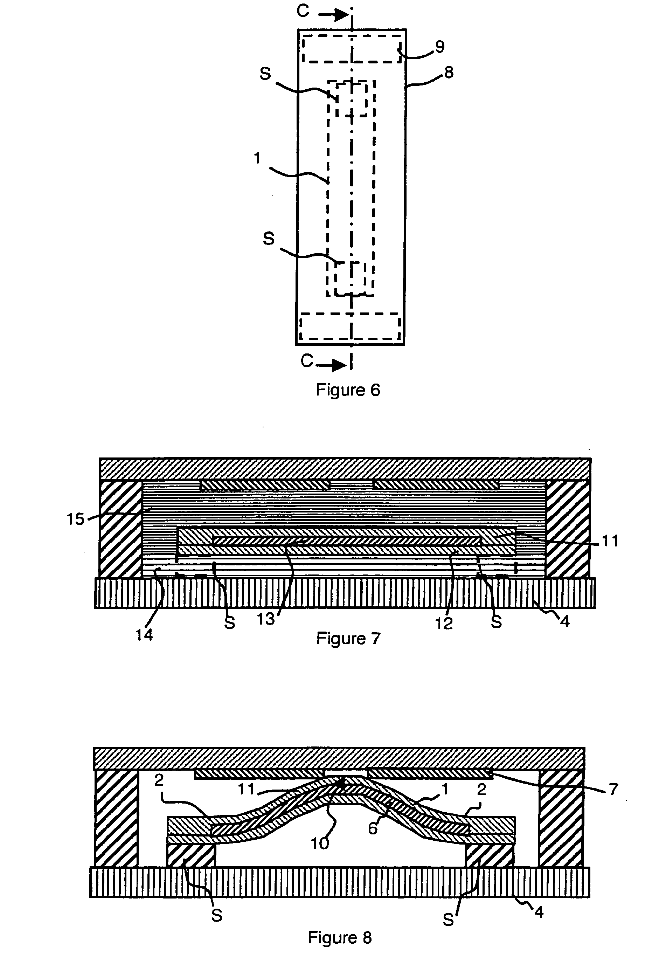

Dans un autre mode de réalisation particulier représenté aux figures 6 à 8, la poutre comporte elle-même au moins une couche sous contrainte en compression selon un axe longitudinal C-C de la poutre 1. Le support S est simplement constitué par deux socles de fixation. Comme représenté à la figure 7, la poutre 1 peut être réalisée par dépôt, sur un ensemble formé par une première couche sacrificielle 14 et les deux socles constituant le support S. Ainsi, des contraintes résiduelles dues à la fixation de la poutre 1 sur les socles de fixation (S) provoquent le flambement de la poutre 1, de manière à ce que la flèche 10 de la poutre 1 soit proche de la seconde électrode 7, après enlèvement de la première couche sacrificielle 14, comme représenté à la figure 8.

Les contraintes résiduelles peuvent être maîtrisées en jouant par exemple sur les épaisseurs, les dimensions, la géométrie et les matériaux (module de Young, coefficient de Poisson) des couches déposées. On utilise, par exemple, des composés nitrurés sous contrainte en traction ayant une épaisseur comprise entre 0,5 et 1 micron pour l'anneau 3. Le niveau de la contrainte en traction, nécessaire pour que la flèche 10 de la poutre 1 soit proche de la seconde électrode 7, peut être étudié par des simulations par éléments finis en faisant varier les valeurs des contraintes pour calculer le flambement de la poutre 1. Ainsi, on détermine la valeur de la contrainte pour laquelle le flambement présente une amplitude telle que la poutre 1 touche en un point la seconde électrode 7.

On peut également déterminer empiriquement les paramètres ci-dessus par des essais et/ou ajuster les paramètres de dépôt du nitrure, par exemple la température ou la puissance de dépôt. La première électrode 6, qui est mobile, peut être en nitrure de titane TiN ou de l'or. L'épaisseur de la première électrode 6 est, par exemple, comprise entre 0,3 et 0,4 microns.

L'anneau 3 a, par exemple, un diamètre intérieur de 400 microns et un diamètre extérieur de 450 microns. La poutre 1 a donc une longueur de 400 microns et peut, par exemple, avoir une largeur de 60 microns. Le flambement est, par exemple, tel que la flèche 10 de la poutre 1 est surélevée de 12 microns.

L'actionnement du micro-condensateur peut être effectué par l'intermédiaire des première et seconde électrodes. Ainsi, la tension électrique d'actionnement est appliquée entre la première électrode 6 et les secondes électrodes 7, c'est-à-dire que la tension d'actionnement est identique à la tension aux bornes du micro-condensateur, dont la capacité varie ainsi en fonction de la tension appliquée à ses bornes.

Pour des applications radiofréquence, il est avantageux de dissocier les bornes du micro-condensateur et les électrodes d'actionnement, de manière à séparer la zone d'actionnement de la zone active définissant la valeur de la capacité variable. En effet, un signal radiofréquence de forte puissance superposé à la tension d'actionnement pourrait perturber le fonctionnement du micro-condensateur. Dans ce cas, des électrodes supplémentaires peuvent être utilisées pour l'actionnement. On peut, par exemple, utiliser des premières et secondes électrodes supplémentaires pour l'actionnement électrostatique et dissocier complètement l'actionnement des première (6) et seconde (7) électrodes du micro-condensateur.

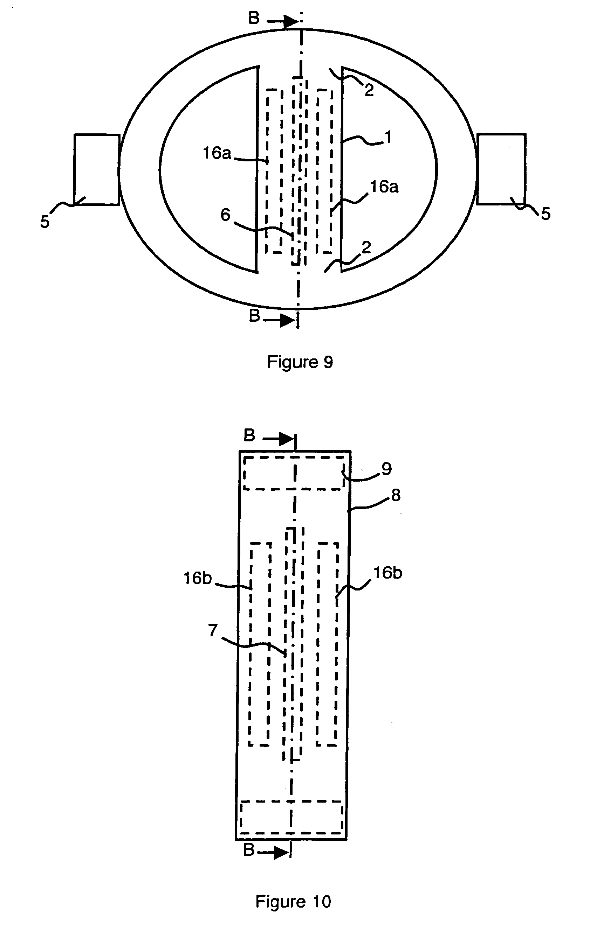

Il est également possible d'utiliser l'une des première et seconde électrodes pour l'actionnement. Par exemple, le micro-condensateur comporte au moins une électrode supplémentaire 16a solidaire de la poutre 1. La tension électrique d'actionnement est ainsi appliquée entre l'électrode supplémentaire 16a et les secondes électrodes 7. Comme représenté à la figure 9, deux électrodes supplémentaires 16a solidaires de la poutre 1 peuvent être disposées de part et d'autre de l'axe B-B qui est l'axe longitudinal de la poutre 1. La largeur des secondes électrodes 7 est adaptée à la largeur de l'ensemble des deux électrodes supplémentaires 16a et de la première électrode 6.

Dans un autre mode de réalisation particulier de l'actionnement, le micro-condensateur comporte une électrode supplémentaire 16b solidaire du support supplémentaire 8. La tension électrique d'actionnement est ainsi appliquée entre l'électrode supplémentaire 16b et la première électrode 6. Comme représenté à la figure 10, deux électrodes supplémentaires 16b solidaires du support supplémentaire 8 peuvent, par exemple, être disposées de part et d'autre d'un axe longitudinal du support supplémentaire 8. Ainsi, les deux électrodes supplémentaires 16b sont disposées respectivement de part et d'autre de la seconde électrode 7 unique, disposée sur l'axe B-B qui correspond à l'axe longitudinal du support supplémentaire 8 et de la poutre 1. La largeur de la première électrode 6 est alors adaptée à la largeur de l'ensemble des deux électrodes supplémentaires 16b et de la seconde électrode 7.

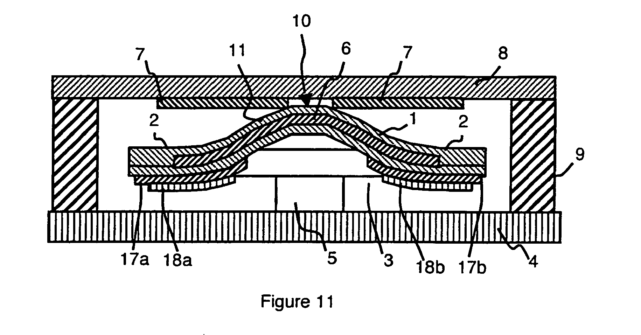

Dans une variante de réalisation, la poutre 1 du micro-condensateur comporte une couche en matériau piézoélectrique (AIN, PZT,etc.) ou en matériau apte à se dilater thermiquement (AI, AISi, Inconel™, etc.). Dans le mode de réalisation particulier illustré à la figure 11 en position de repos, cette couche 17 forme, à la surface inférieure de la poutre 1, deux zones distinctes 17a et 17b, respectivement disposées aux extrémités longitudinales de la poutre 1. Une électrode d'actionnement 18, par exemple en Titane (Ti), nitrure de titane (TiN), platine (Pt) ou or, recouvre au moins une partie de la couche 17. Sur la figure 11, deux électrodes d'actionnement 18a et 18b recouvrent partiellement respectivement les zones 17a et 17b de la couche 17. L'application d'une tension d'actionnement entre les électrodes 6 et 18 provoque la dilatation du matériau, piézoélectrique ou apte à se déformer thermiquement, de la couche 17. La dilatation de ce matériau étant supérieur à celle des matériaux (SiN, oxyde, Si, etc.) constituant les couches structurelles de la poutre, il se produit un effet de bilame, qui provoque l'apparition d'un couple mécanique, augmentant ainsi la zone de collage.

La longueur de la couche 17 peut être inférieure ou égale à la longueur L de la poutre. Dans un mode de réalisation préférentiel, chaque zone 17a et 17b a une longueur sensiblement voisine de L/3. La largeur de la couche 17 est inférieure ou égale à la largeur de la poutre et son épaisseur est, de préférence, comprise entre 0,2 et 1 µm. Cette épaisseur peut être calibrée en fonction du déplacement désiré.

L'invention n'est pas limitée aux modes de réalisation représentés. En particulier, le nombre des première et seconde électrodes peut être quelconque. Par exemple, le micro-condensateur peut comporter plusieurs premières électrodes 6 et/ou une seule seconde électrode 7 ou plus de deux secondes électrodes 7.

## Revendications

1. Micro-condensateur électromécanique ayant une capacité variable en fonction d'une tension électrique d'actionnement et comportant au moins des première (6) et seconde (7) électrodes, la première électrode (6) étant solidaire d'une poutre (1) ayant deux extrémités (2) solidaires d'un support (S) fixé sur un substrat (4), micro-condensateur **caractérisé en ce que** des contraintes résiduelles provoquent un flambement de la poutre (1), de manière à ce que la flèche (10) de la poutre (1) soit proche de la seconde électrode (7).

2. Micro-condensateur selon la revendication 1, **caractérisé en ce que** la poutre (1) comporte une couche isolante (11) disposée en regard de la seconde électrode (7).

3. Micro-condensateur selon la revendication 2, **caractérisé en ce que** la flèche (10) de la poutre (1) est en contact avec la seconde électrode (7).

4. Micro-condensateur selon l'une quelconque des revendications 1 à 3, **caractérisé en ce que** le support (S) est constitué par un anneau (3) fixé au substrat (4) par l'intermédiaire de deux socles de fixation (5) disposés de part et d'autre de l'anneau (3) sur un axe de fixation (A-A) passant par le centre (P) de l'anneau (3), la poutre (1) étant disposée sur un diamètre de l'anneau (3) perpendiculaire à l'axe de fixation (A-A), l'anneau (3) comportant au moins une couche sous contrainte en traction selon l'axe de fixation (A-A).

5. Micro-condensateur selon l'une quelconque des revendications 1 à 4, **caractérisé en ce que** la poutre (1) comporte au moins une couche sous contrainte en compression selon un axe longitudinal (B-B) de la poutre (1).

6. Micro-condensateur selon l'une quelconque des revendications 1 à 5, **caractérisé en ce que** la seconde électrode (7) est solidaire d'un support supplémentaire (8), la poutre (1) étant disposé entre le substrat (4) et la seconde électrode (7).

7. Micro-condensateur selon la revendication 6, **caractérisé en ce que** deux secondes électrodes (7) sont disposées, en regard de la poutre (1), selon un axe parallèle à l'axe longitudinal de la poutre (1), respectivement de part et d'autre de la flèche (10) de la poutre (1).

8. Micro-condensateur selon l'une quelconque des revendications 1 à 7, **caractérisé en ce que** les première (6) et seconde (7) électrodes constituent des moyens d'actionnement électrique, la tension électrique d'actionnement étant destinée à être appliquée entre les première (6) et seconde (7) électrodes.

9. Micro-condensateur selon l'une quelconque des revendications 1 à 7, **caractérisé en ce que** la poutre (1) comporte une couche (17) en matériau choisi parmi les matériaux piézoélectriques et les matériaux déformables thermiquement et recouverte au moins partiellement par une électrode d'actionnement (18), la tension électrique d'actionnement étant destinée à être appliquée entre l'électrode d'actionnement (18) et la première électrode (6).

10. Micro-condensateur selon l'une quelconque des revendications 1 à 7, **caractérisé en ce qu'**il comporte des moyens d'actionnement électrique comportant au moins une électrode supplémentaire (16a) solidaire de la poutre (1), la tension électrique d'actionnement étant destinée à être appliquée entre l'électrode supplémentaire (16a) et la seconde électrode (7).

11. Micro-condensateur selon la revendication 10, **caractérisé en ce que** deux électrodes supplémentaires (16a) solidaires de la poutre (1) sont disposées de part et d'autre d'un axe longitudinal de la poutre (1).

12. Micro-condensateur selon l'une des revendications 6 et 7, **caractérisé en ce qu'**il comporte des moyens d'actionnement électrique comportant au moins une électrode supplémentaire (16b) solidaire du support supplémentaire (8), la tension électrique d'actionnement étant destinée à être appliquée entre l'électrode supplémentaire (16b) et la première électrode (6).

13. Micro-condensateur selon la revendication 12, **caractérisé en ce que** deux électrodes supplémentaires (16b) solidaires du support supplémentaire (8) sont disposées de part et d'autre d'un axe longitudinal du support supplémentaire (8).

14. Procédé de fabrication d'un micro-condensateur électromécanique selon l'une quelconque des revendications 1 à 13, **caractérisé en ce qu'**il comporte le dépôt sous contrainte d'au moins l'un des éléments choisis parmi la poutre (1) et le support (S), de manière à ce que des contraintes résiduelles provoquent un flambement de la poutre (1).

15. Procédé selon la revendication 14, **caractérisé en ce qu'**il comporte la réalisation, sur une couche sacrificielle (14), de la poutre (1) et de l'anneau (3) en un seul empilement de couches, de manière à ce que, après enlèvement de la couche sacrificielle (14), l'anneau (3) soit sous contrainte en traction selon l'axe de fixation (A-A).

16. Procédé selon la revendication 14, **caractérisé en ce qu'**il comporte la réalisation, sur un ensemble formé par une couche sacrificielle (14) et le support (S), de la poutre (1) par dépôt d'au moins une couche sous contrainte en compression selon un axe longitudinal (B-B) de la poutre (1).

## Claims

1. Electromechanical micro-capacitor having a variable capacitance according to an electrical actuating voltage and comprising at least first (6) and second (7) electrodes, the first electrode (6) being integral to a beam (1) having two ends (2) securedly affixed to a support (S) fixed onto a substrate (4), micro-capacitor **characterized in that** residual stresses cause buckling of the beam (1) so that the arch (10) of the beam (1) is close to the second electrode (7).

2. Micro-capacitor according to claim 1, **characterized in that** the beam (1) comprises an insulating layer (11) arranged facing the second electrode (7).

3. Micro-capacitor according to claim 2, **characterized in that** the arch (10) of the beam (1) is in contact with the second electrode (7).

4. Micro-capacitor according to any one of the claims 1 to 3, **characterized in that** the support (S) is formed by a ring (3) fixed to the substrate (4) by means of two fixing bases (5) arranged on each side of the ring (3) on a fixing axis (A-A) passing through the centre (P) of the ring (3), the beam (1) being arranged on a diameter of the ring (3) perpendicular to the fixing axis (A-A), the ring (3) comprising at least one layer tensile stressed along the fixing axis (A-A).

5. Micro-capacitor according to any one of the claims 1 to 4, **characterized in that** the beam (1) comprises at least one layer stressed in compression along a longitudinal axis (B-B) of the beam (1).

6. Micro-capacitor according to any one of the claims 1 to 5, **characterized in that** the second electrode (7) is integral to an additional support (8), the beam (1) being arranged between the substrate (4) and the second electrode (7).

7. Micro-capacitor according to claim 6, **characterized in that** two second electrodes (7) are arranged facing the beam (1) along an axis parallel to the longitudinal axis of the beam (1), respectively on each side of the arch (10) of the beam (1).

8. Micro-capacitor according to any one of the claims 1 to 7, **characterized in that** the first (6) and second (7) electrodes constitute electrical actuating means, the electrical actuating voltage being designed to be applied between the first (6) and second (7) electrodes.

9. Micro-capacitor according to any one of the claims 1 to 7, **characterized in that** the beam (1) comprises a layer (17) made of a material chosen from piezoelectric materials and thermally deformable materials and at least partially covered by an actuating electrode (18), the electrical actuating voltage being designed to be applied between the actuating electrode (18) and the first electrode (6).

10. Micro-capacitor according to any one of the claims 1 to 7, **characterized in that** it comprises electrical actuating means comprising at least one additional electrode (16a) integral to the beam (1), the electrical actuating voltage being designed to be applied between the additional electrode (16a) and the second electrode (7).

11. Micro-capacitor according to claim 10, **characterized in that** the two additional electrodes (16a) integral to the beam (1) are arranged on each side of a longitudinal axis of the beam (1).

12. Micro-capacitor according to one of the claims 6 and 7, **characterized in that** it comprises electrical actuating means comprising at least one additional electrode (16b) integral to the additional support (8), the electrical actuating voltage being designed to be applied between the additional electrode (16b) and the first electrode (6).

13. Micro-capacitor according to claim 12, **characterized in that** two additional electrodes (16b) integral to the additional support (8) are arranged on each side of a longitudinal axis of the additional support (8).

14. Method for producing an electromechanical micro-capacitor according to any one of the claims 1 to 13, **characterized in that** it comprises stressed deposition of at least one of the elements chosen from the beam (1) and the support (S), so that residual stress cause buckling of the beam (1).

15. Method according to claim 14, **characterized in that** it comprises fabrication of the beam (1) and the ring (3) in a single stacking of layers on a sacrificial layer (14), so that, after the sacrificial layer (14) has been removed, the ring (3) is tensile stressed along the fixing axis (A-A).

16. Method according to claim 14, **characterized in that** it comprises fabrication of the beam (1), on an assembly formed by a sacrificial layer (14) and the support (S), by deposition of at least one layer stressed in compression along a longitudinal axis (B-B) of the beam (1).

## Patentansprüche

1. Elektro-mechanischer Mikrokondensator, der eine Kapazität hat, welche in Abhängigkeit von einer elektrischen Betätigungsspannung variabel ist und zumindest eine erste (6) und eine zweite (7) Elektrode aufweist, wobei die erste Elektrode (6) an einem Träger bzw. Balken (1) fest ist, der zwei äußere Enden (2) hat, welche mit einem Lager (S) fest sind, welches auf einem Substrat (4) fixiert ist, wobei der Mikrokondensator **dadurch gekennzeichnet ist, dass** die Restspannungen eine Biegung des Balkens (1) derart hervorrufen, dass die Spitze (10) des Balkens (1) in der Nähe der zweiten Elektrode (7) ist.

2. Mikrokondensator nach Anspruch 1, **dadurch gekennzeichnet, dass** der Balken (1) ein Isolierschicht (11) aufweist, welches gegenüberliegend zur zweiten Elektrode (7) angeordnet ist.

3. Mikrokondensator nach Anspruch 2, **dadurch gekennzeichnet, dass** die Spitze (10) des Balkens (1) in Kontakt mit der zweiten Elektrode (7) ist.

4. Mikrokondensator nach einem der Ansprüche 1 bis 3, **dadurch gekennzeichnet, dass** das Lager (S) durch einen Ring (3) gebildet ist, der auf dem Substrat (4) durch Zwischenanordnen von zwei Fixiersockeln (5) fixiert ist, welche beiderseits auf dem Ring (3) auf einer Fixierachse (A-A) angeordnet sind, welche durch die Mitte (P) des Rings (3) läuft, wobei der Balken (1) auf einem Durchmesser des Rings (3) senkrecht zur Fixierachse (A-A) angeordnet ist, wobei der Ring (3) wenigstens eine Schicht unter Zugspannung gemäß der Fixierachse (A-A) aufweist.

5. Mikrokondensator nach einem der Ansprüche 1 bis 4, **dadurch gekennzeichnet, dass** der Balken (1) wenigstens eine Schicht unter Kompressionsspannung gemäß einer Achse (B-B) längs des Balkens (1) aufweist.

6. Mikrokondensator nach einem der Ansprüche 1 bis 5, **dadurch gekennzeichnet, dass** die zweite Elektrode (7) fest ist mit einem Ergänzungslager (8), wobei der Balken (1) zwischen dem Substrat (4) und der zweiten Elektrode (7) angeordnet ist.

7. Mikrokondensator nach Anspruch 6, **dadurch gekennzeichnet, dass** zwei zweite Elektroden (7) gegenüberstehend vom Balken (1) gemäß einer Achse parallel zur Längsachse des Balkens (1) entsprechend beiderseits der Spitze (10) des Balkens (1) angeordnet sind.

8. Mikrokondensator nach einem der Ansprüche 1 bis 7, **dadurch gekennzeichnet, dass** die erste (6) und die zweite (7) Elektrode elektrische Betätigungsmittel bilden, wobei die elektrische Betätigungsspannung dazu bestimmt ist, zwischen der ersten (6) und der zweiten (7) Elektrode angelegt zu werden.

9. Mikrokondensator nach einem der Ansprüche 1 bis 7, **dadurch gekennzeichnet, dass** der Balken (1) eine Schicht (17) aus Material aufweist, welches unter piezo-elektrischen Materialien und den Materialien gewählt ist, welche thermisch deformierbar sind und wenigstens teilweise durch eine Betätigungselektrode (7) überdeckt ist, wobei die elektrische Betätigungsspannung dazu bestimmt ist, zwischen der Betätigungselektrode (18) und der ersten Elektrode (6) angelegt zu werden.

10. Mikrokondensator nach einem der Ansprüche 1 bis 7, **dadurch gekennzeichnet, dass** er elektrische Betätigungsmittel aufweist, welche wenigstens eine Ergänzungselektrode (16a) aufweisen, welche fest mit dem Balken (1) ist, wobei die elektrische Betätigungsspannung bestimmt ist, zwischen der Ergänzungselektrode (16a) und der zweiten Elektrode (7) angelegt zu werden.

11. Mikrokondensator nach Anspruch 10, **dadurch gekennzeichnet, dass** zwei Ergänzungselektroden (16a), welche mit dem Balken (1) fest sind, beiderseits einer Achse längs des Balkens (1) angeordnet sind.

12. Mikrokondensator nach einem der Ansprüche 6 und 7, **dadurch gekennzeichnet, dass** er elektrische Betätigungsmittel aufweist, welche wenigstens eine Ergänzungselektrode (16b) aufweisen, welche fest mit einem Ergänzungslager (8) sind, wobei die elektrische Betätigungsspannung bestimmt ist, zwischen der Ergänzungselektrode (16b) und der ersten Elektrode (6) angelegt zu werden.

13. Mikrokondensator nach Anspruch 12, **dadurch gekennzeichnet, dass** zwei Ergänzungselektroden (16b), welche mit dem Ergänzungslager (8) fest sind, beiderseits einer Achse längs des Ergänzungslagers (8) angeordnet sind.

14. Verfahren zum Herstellen eines elektro-mechanischen Mikrokondensators nach einem der Ansprüche 1 bis 13, **dadurch gekennzeichnet, dass** es das Ablagern unter Spannung von wenigstens einem der Elemente aufweist, welches unter dem Balken (1) und dem Lager (S) gewählt ist, derart, dass Restspannungen eine Biegung des Balkens (1) hervorrufen.

15. Verfahren nach Anspruch 14, **dadurch gekennzeichnet, dass** es die Realisierung - über einer Opferschicht (14) - des Balkens (1) und des Rings (3) in einer einzigen Aufschichtung von Schichten aufweist, derart, dass nach Entfernung der Opferschicht (14) der Ring (3) unter Zugspannung gemäß der Fixierachse (A-A) ist.

16. Verfahren nach Anspruch 14, **dadurch gekennzeichnet, dass** es die Realisierung - über einem Zusammenbau, der durch die Opferschicht (14) und das Lager (S) gebildet ist - des Balkens (1) unter Ablagerung von wenigstens einer Schicht unter Kompressionsspannung gemäß der Längsachse (B-B) des Balkens (1) umfasst.
